# EUROPEAN PATENT APPLICATION

(11) **EP 4 653 741 A1**
(43) Date of publication of application: **26.11.2025**
(21) Application number: 25178344.5
(22) Date of filing: 22.05.2025
(51) Int. Cl.: F16L 23/08, B21K 1/16, B21K 23/00

(54) **A CLAMP AND METHOD OF MANUFACTURING THE CLAMP**

(30) Priority: 23.05.2024 PL 44866524
(71) Applicant: Schraner Polska Spolka z o.o., 99-100 Leczyca (PL)
(72) Inventor: Szymanska, Tatiana, 99-100 Leczyca (PL); Dudkiewicz, Lukasz, 99-100 Leczyca (PL)
(74) Representative: Kicinska-Fujawa, Alicja

(57) **Abstract**

The subject of the invention is a clamp for connecting pipe lines equipped with annular flanges, being a band structure adapted to encircle the pipe lines to be connected, containing a first end (1) and a second end (2) equipped with fixing brackets (3) and at least two clamping segments (4) covering a recess (5) receiving the annular flange of the pipe line, the at least two clamping segments (4) being connected in series by a resilient bridge (6). The subject of the invention also includes a method of manufacturing a clamp.

## Description

The subject of the invention is a clamp which is a high-strength construction and a method of manufacturing a clamp. The subject of the invention finds its application for the detachable connection of tubing equipped with flanges, such as those used in the automotive industry for connecting exhaust systems, or in the pharmaceutical and chemical industries, for connecting fluid lines in process lines, as well as water, oil, water and oil hydraulic systems, including power hydraulics.

Clamps, in particular those used at the turbine outlet of internal combustion engines, exhaust and intake systems or EGR systems, are particularly exposed to harsh and varying conditions at different times in their life cycle. As a result, they must be characterised by high mechanical properties and be predisposed to operating at elevated temperatures. High technical and operational requirements are therefore placed on these types of clamps, with the desired adaptability to the shapes of the flanges to be joined. These clamps ensure reliability and safety in the event of temperature fluctuations, vibrations and high stresses, such as those encountered in internal combustion engines. In the technical field, they are often referred to as V-band clamps (V-clamp) due to the cross-section of the clamp's working part.

Clamps used in the field of technology dedicated to the joining of tubing with annular flanges are usually a clamp-based design, on the inner surface of which coupling segments are arranged. This arrangement ensures the required high axial force and resistance to high operating temperatures of the tubing to be joined. Typically, the coupling segments are fixed to the clamp by means of a weld or spot weld, which involves the risk of tearing off the individual coupling segments of the clamp, as well as reducing the rigidity of the tubing flange connection. Furthermore, this clamp design requires more components, which affects the final weight of the clamp, which is a performance parameter that is particularly important in the automotive or aerospace industries.

From the description of European patent EP1731818B1, there is known a device for the detachable joining of two flanges, the device being provided with at least three C-shaped clamping segments, which are positioned slidingly annularly around the flanges and, in the joining state, enclose the flanges radially from the outside. The flange connection device comprises a support plate, torsionally resistant and parallel to the flange connection surface, with longitudinal openings. In addition, the flange joining device includes a guide plate, parallel to the support plate and rotatable, with curved tracks and guide pins, which are positioned slidingly radially in longitudinal holes in the support plate and guided in the curved tracks of the guide plate. Advantageously, in the flange connection device, a swivel ring is positioned at the guide plate and a swivel mechanism is used which is positioned at the support plate and which is connected to the swivel ring so that it serves to rotate the swivel ring with the guide plate relative to the support plate.

The description of European patent application EP3485191A1 discloses a V-shaped clamp designed for joining circular flanges formed at opposite ends of two pipes. The clamp comprises at least one segment of substantially V-shaped cross-section adapted to encircle said tubing flanges. The clamp further comprises a clamp surrounding said at least one segment and closed lugs located at both ends of the clamp, with a pair of pivots surrounded by the closed lugs and a tension bolt passing through said pivots in the area of the ends of the clamp.

The at least one segment with a substantially V-shaped cross-section comprises two inclined surfaces configured to interact with the tubing flanges in such a way that the radial force exerted by the clamp is at least partially converted into an axial force pressing the flanges against each other. In order to reduce the bending stress acting on the bolt and to improve the distribution of the clamping force, the V-shaped clamp is provided with a support structure located at the end of at least one segment in the area under the clamping bolt, whereby, when said radial force exceeds a threshold value, the support structure transmits a part of the radial force through a different surface than said inclined surfaces.

The subject of European patent application EP1600680A1 is a flanged cable clamping device constituting a V-shaped clamp.

Said clamp includes a band structure containing one or more channel elements which are curved around a central reference point. The channel elements are adapted to receive the flanges of the wires to be clamped. The device also includes a clamping element for pressing the channel elements around the wires to be joined. The device further comprises a plurality of centring elements that extend inwards from the area defined by the tape structure. The centring elements are adapted to engage with the flanges to ensure alignment between the conductors during crimping.

European patent EP3795877B1, on the other hand, discloses a clamping band comprising a metal strap configured to attach to an object having an annular bulge. The metal belt includes an inner cavity receiving the annular bulge of the object and including a bottom bounded by side walls. The metal belt further has a flange oriented in the direction of the belt axis, the flange comprising a load-bearing reserve element formed by a portion of the belt that has the ability to expand under the clamping tension of the belt. The load-bearing reserve element is bounded along the circumferential direction of the chord by connecting sections in which the side walls are interrupted to form a discontinuity.

The load-bearing reserve element further has side wall sections oriented in the direction of the chord axis.

The technical problem posed by the present invention is to propose a clamp that is dedicated to the joining of tubular tubing equipped with annular flanges, while providing a very high axial clamping force and resistance to the high operating temperatures of the tubing to be joined. It is also desirable that the clamp will facilitate the fit to the annular flanges of the piping to be joined, especially those where an exact axial fit cannot be achieved or where there are slight geometric deviations beyond the tolerance limits in such application. It is therefore desirable that the clamp should allow such mismatched designs to be joined, thus providing a versatile solution and ensuring that tubing with flanges with minor manufacturing imperfections can be joined, while maintaining a high degree of rigidity in the clamp design. It is further desirable that the clamp should provide a more homogeneous distribution of pressure around the perimeter of the tubing flanges to be joined, while being a reduced overall weight design.

The technical problem posed by the present invention is also to propose a method of manufacturing a clamp that will lead to a clamp that solves the technical problem presented above, and that will be implemented with a limited number of steps, resulting in a reduction of time and energy used in the manufacturing process.

In addition, it is desirable that the method of manufacturing the clamp ensures a reduction in the amount of waste generated and can be implemented in process lines using limited machinery.

A first subject of invention is a clamp for joining tubular tubing equipped with annular flanges, constituting a band structure adapted to encircle the tubular tubing to be joined, comprising a first end and a second end equipped with fixing brackets and at least two clamping segments comprising a recess receiving the annular flange of the tubular tubing, characterised in that the at least two clamping segments are connected in series by a springy bridge.

Preferably, the clamping segments have the same length of arc defined on the inner surface of the receiving recess.

Preferably, in the clamped position of the clamp, the clamping segments are arranged at equal angular spacing around the central axis of the clamp.

Preferably, the springy bridge is formed by a U-shaped or V-shaped flat bar.

Preferably, the central area of the springy bridge extends radially out of the clamp's substantially circular outline, which is determined by the outer surfaces of the clamping segments.

Preferably, the springy bridge comprises at least one reinforcing rib.

Preferably, the reinforcing rib extends along the circumferential direction, on the external and/or the inner surface of the springy bridge.

Preferably, the flat bar from which springy bridge is made of has a cross-section in the shape of a rectangle, a barrel-shaped, an hourglass, a trapezium or a polygon.

Preferably, the flat bar from which the springy bridge is formed has a variable thickness, advantageously along the circumferential direction of the clamp.

Preferably, the clamping segment has a V-letter, U-letter, double-V-letter or double-U-letter cross-section.

Preferably, the clamping band is a uniform element.

Preferably, a clamping fastener is placed in the fixing brackets.

Preferably, the clamp is made of steel, aluminium alloys or titanium alloys.

The second object of the invention is a method of manufacturing a clamp for connecting tubing equipped with annular flanges, characterised in that it comprises steps in which:
(a) hot-working of batching material is carried out for making a die-forging of clamp, comprising at least two clamping segments (4) being connected by flat bar and having first and second end,
(b) cutting off fash at the ends of die-forging of clamp for making fixing brackets (3), and fash of flat bar connecting at least two clamping segments (4) to obtain external shape of springy bridge (6),
c) calibration of at least two clamping segments,
d) bending of die-forging of clamp for making clamp of generally circular shape, clamp having at least two clamping segments (4) being connected in series via flat bar.

Preferably, step d) is carried out so that the springy bridge is formed by a U-letter shaped or V-letter shaped flat bar.

Preferably, step d) is carried out so that the central area of the bridge extends radially out of clamp's generally circular outline, which is determined by outer surfaces of clamping segments.

Preferably, step a) is carried out such that the springy bridge comprises at least one reinforcing rib.

Preferably, the reinforcing rib extends along the circumferential direction on the outer surface and/or the inner surface of the springy bridge.

Preferably, step a) is carried out such that the flat bar from which the springy bridge is formed has a cross-section in the shape of a rectangle, a barrel, an hourglass, a trapezoid or a polygon.

Preferably, step a) is carried out so that the flat bar from which the springy bridge is formed has a variable width, advantageously along the circumferential direction.

Preferably, step a) is carried out so that the clamping segment has a V-shaped, U-shaped, double-V-shaped or double-U-shaped cross-section.

Preferably, prior to step a), the batching material is prepared by rod cutting and advantageously abrasive blasting.

Preferably, the forming in step a) is carried out at a temperature in the range of 400°C to 1300°C.

Preferably, the hot-working at elevated temperatures in step a) comprises die-forging using a hammer or forging press.

Preferably, the die-forging is executed in at least two sub-stages consisting of struck on premoulding cavity and struck on moulding cavity.

Preferably, blasting is carried out between steps b) and c).

Preferably, after step d), a clamping fastener is placed in the fixing brackets.

Preferably, the batching material is steel, aluminium alloys or titanium alloys.

The clamp according to the present invention provides a dedicated solution for joining tubing equipped with annular flanges. Thanks to the use of at least two clamping segments connected in series by a springy bridge, a high axial clamping force of the joined clamping flanges is achieved. The use of at least two clamping segments with equal arc lengths defined on the inner surface of the receiving recess and, moreover, spaced at equal angular intervals, further increases the maximum clamping force achievable and distributes it evenly and homogeneously around the circumference of the clamp. Furthermore, the use of springy bridges to connect the clamp segments in series makes it possible to achieve a certain degree of resilience of the target clamp, thus making it possible to join tubing where the flanges have a certain degree of dimensional deviation and inaccuracy. In addition, the use of U-shaped springy bridges with an elongated course of the flat bar from which they are made makes it possible to increase the deformation range of the target clamp, ensuring an increased range of supported annular flange diameters. In turn, the use of different geometric structures for the springy bridges, including reinforcing ribs, different cross-sections or varying the thickness of the flat bar of which the springy bridge is made, allows a wide range of control over the performance parameters of the resulting springy bridge, especially the degree of elasticity, stiffness, strength, as well as the degree of possible deformation.

The use of high-temperature forming in the manufacturing process to create a homogenous component comprising all components of the target clamp, including clamping segments, connecting bridges and fixing brackets, ensures very high clamp axial strength, high temperature resistance and high reliability. The results obtained are, among other things, related to the advantageous fibre arrangement obtained by die forging, which further strengthens the clamp structure and ensures improved performance.

The method of manufacturing the clamp according to the present invention is characterised by a limited number of steps necessary to be carried out, thus allowing for a reduction in time and energy consumption, as well as it can be implemented in process lines with limited machinery. Thanks to the development of a low-carbon and highly efficient method of producing a clamp according to the present invention, a reduction in waste material to a minimum has been achieved. Furthermore, by manufacturing all components from a uniform batch material in a die-forging process, a clamp with increased reliability with reduced overall weight was obtained. It is also worth mentioning that the clamp, thanks to the use of elastic, springy bridges to connect the clamp segments, allows it to be flexed - for free and easy insertion onto the annular flanges connecting the tubing.

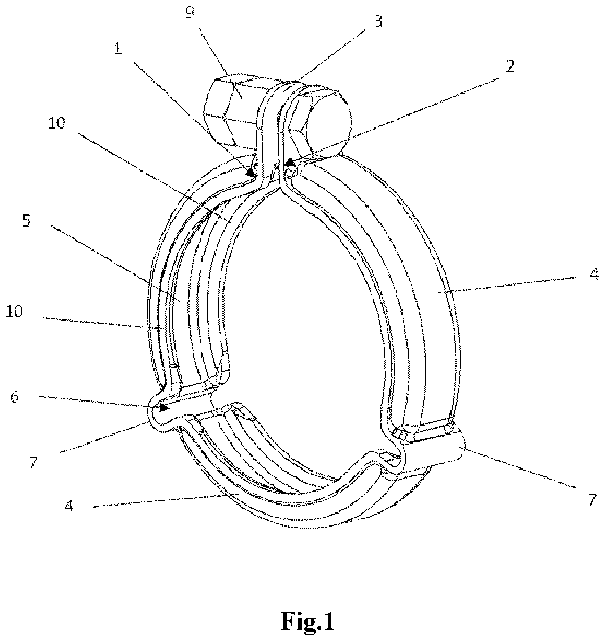

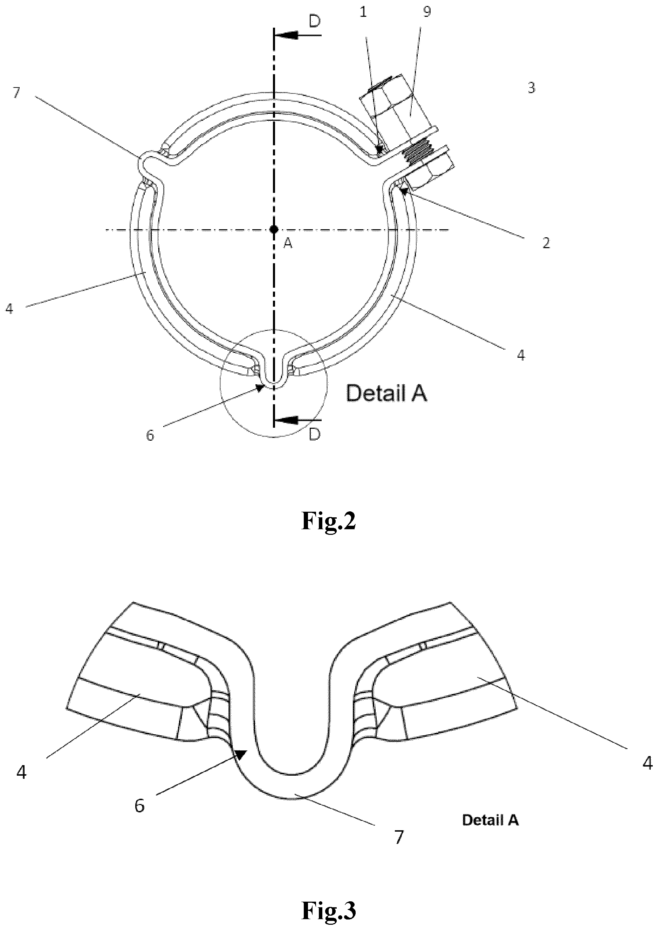

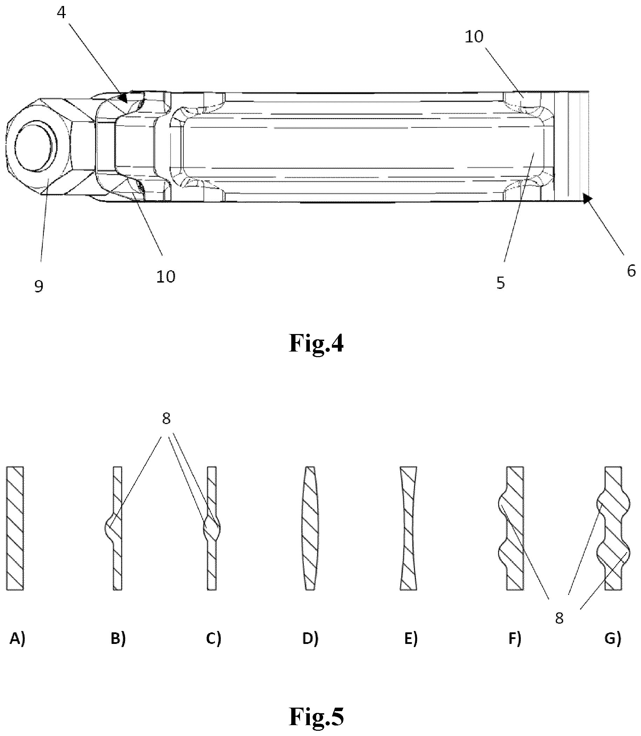

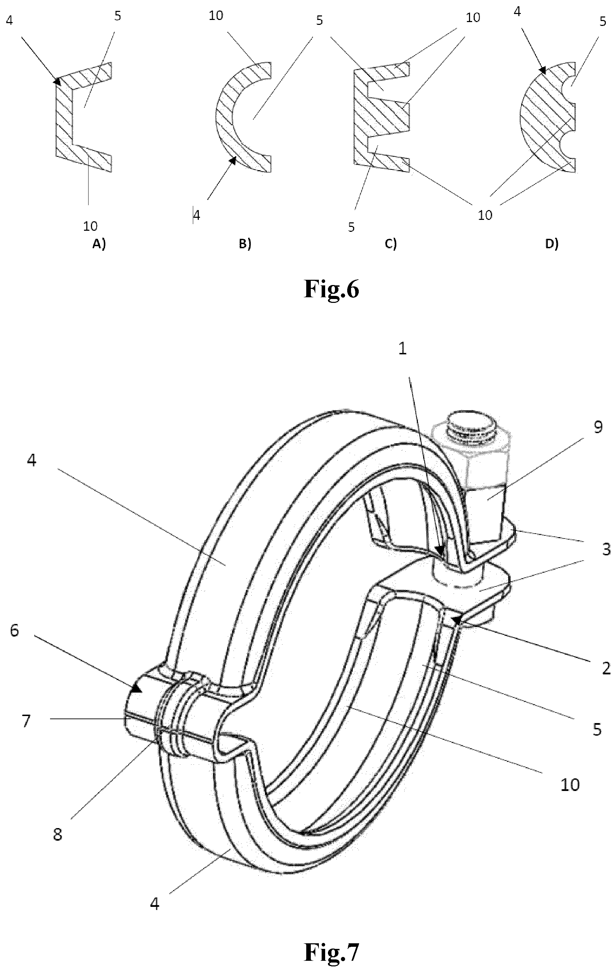

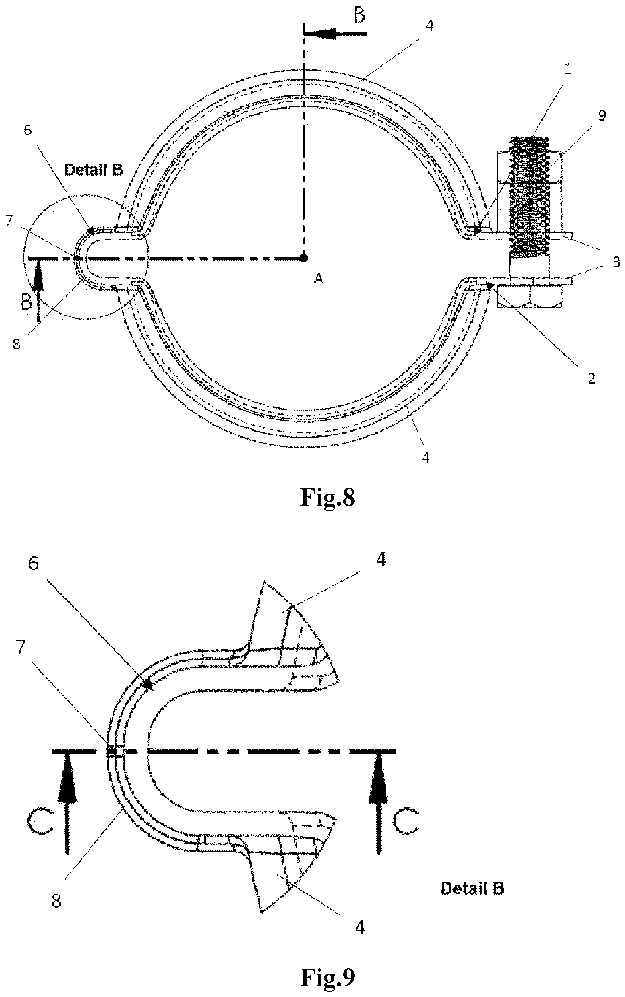

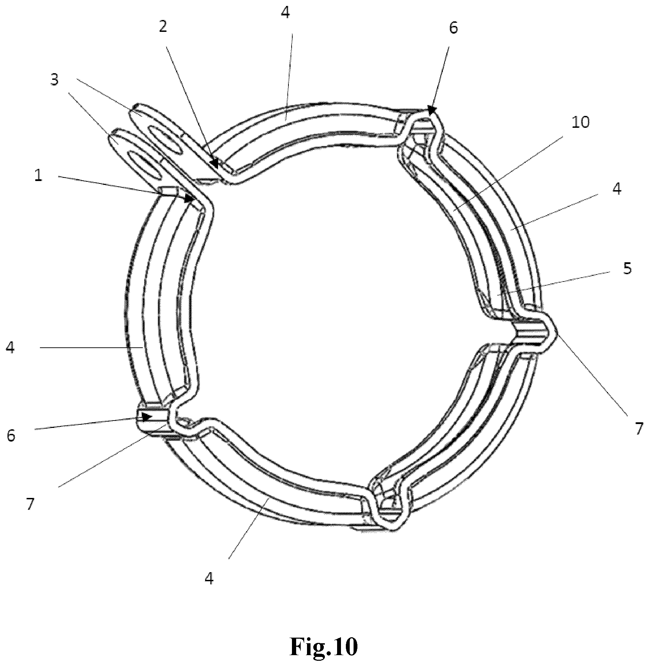

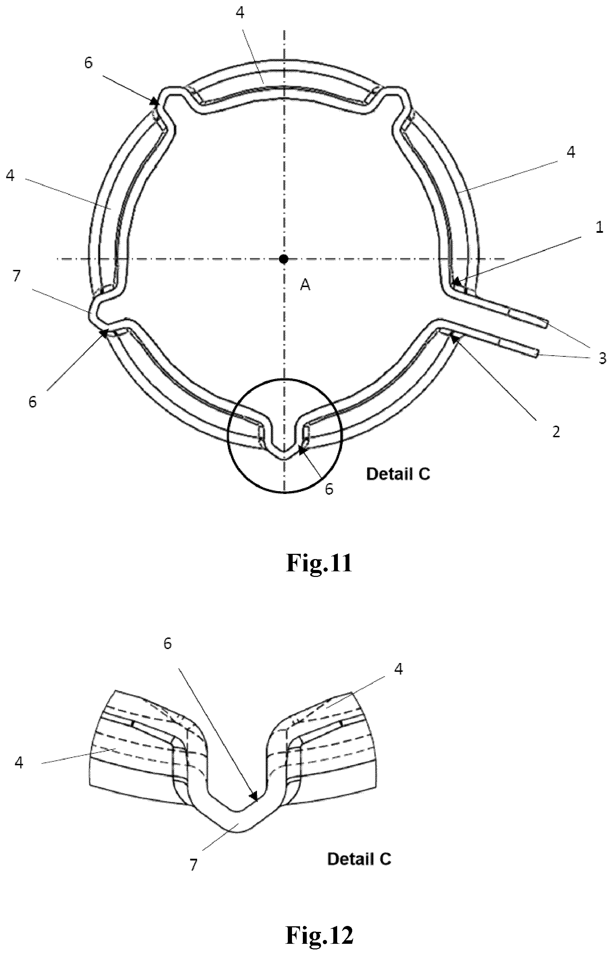

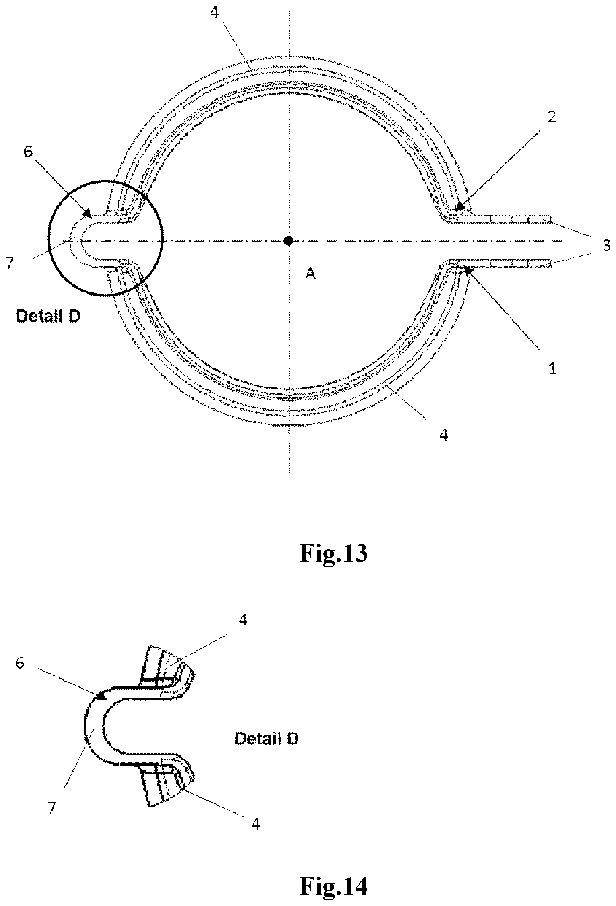

The solution according to the invention is shown in the following embodiments and is illustrated in the drawing, where fig. 1 shows in axonometric view the first example of a clamp according to the present invention, fig. 2 shows in side view the clamp of fig. 1, fig. 3 shows an enlargement of detail A from fig. 2, fig. 4 shows a sectional front view of the clamp from fig. 1, fig. 5A-G show alternative cross-sections of the springy bridge component of the clamp according to the present invention, fig. 6A-D show alternative cross-sections of the clamping segment constituting a component of the clamp according to the present invention, fig. 7 depicts in axonometric view a second embodiment of a clamp according to the present invention, fig. 8 shows a cross-sectional side view of the clamp from fig. 7, fig. 9 shows an enlargement of detail B from fig. 8, fig. 10 shows in axonometric view a third embodiment of a clamp according to the present invention, fig. 11 shows a side view of the clamp from fig. 10, fig. 12 shows an enlargement of detail C from fig. 11, fig. 13 shows a side view of the fourth embodiment of the clamp according to the present invention, while fig. 14 shows an enlargement of detail D from fig. 13.

### Embodiment 1

The first embodiment of a clamp according to the present invention is illustrated in axonometric view in fig. 1, in side view in fig. 2 together with an enlargement of detail A shown in fig. 3 and in cross-sectional front view in fig. 4.

The clamp, which is the first embodiment of the invention, is designed for connecting exhaust tubing in motor vehicles, which are equipped in the end areas with annular flanges formed by splines. The clamp is applied to the two annular flanges of the tubing to be joined and clamped to obtain a permanent and tight connection resistant to the high temperatures prevailing in the exhaust systems of motor vehicles.

The clamp shown in the figures according to the present invention is a band structure and is adapted to encircle the tubing to be joined. In the clamped position, the clamp assumes a circular shape, corresponding to the shape of the annular flanges of the tubing to be joined. As best illustrated in figs. 1 and 2, the clamp comprises a first end 1 and a second end 2, which are equipped with fixing brackets 3. The fixing brackets 3 take the form of solutions known in the technical field and can be formed without limitation by a flat bar with a fixing hole formed. Through the fixing holes, a clamping fastener 9 is introduced, which in the present example of implementation takes the form of a bolt with a nut and a washer and is designed to clamp the clamping band on the tubing flanges to be joined, by bringing together the fixing brackets 3 located at opposite ends 1, 2 of the clamp. It should be emphasised that the type of clamping fastener 9 used is not limited to that shown in the present example implementation, and alternatively other solutions known in the technical field, such as cam clamps or tension systems, can be used.

As shown in the figures, the clamp according to the present example of the invention comprises three clamping segments 4 comprising recesses 5 surrounded by side walls 10. The recesses 5 in the clamping segments 4 are adapted to receive the annular flanges of the tubing to be joined. Although in the present example of implementation a clamp containing three clamping segments 4 is shown, the number of clamping segments 4 is not a limitation of the scope of the present invention, and in alternative implementations it is possible to use a smaller or larger number of clamping segments 4, with not less than two clamping segments 4. The number of 4 clamp segments is dictated, among other things, by the geometry of the annular flanges to be joined.

In the present example of the implementation of the invention, the clamp has clamping segments 4 which have the same length of the arc defined on the inner surface of the recess 5. Furthermore, when the clamp is in the clamped position, the clamping segments 4 are spaced at an equal angular interval around the central axis A of the clamp, i.e. in the present example of the implementation they occur every 120°.

On the other hand, it should be emphasized that both the length of the clamping segments 4, expressed in terms of the length of the arc traced on the inner surface of recess 5, as well as the angular distribution of the clamping segments 4, are not limited to those shown in this example implementation, and thus in alternative implementations the clamping band may include clamping segments 4 with variable lengths of the arc traced on the inner surface of recess 5, as well as distributed at different angular intervals. It is worth pointing out, however, that both the equal lengths of the 4 clamping segments and their uniform distribution represent an advantageous solution, increasing the circumferential uniformity of the pressure exerted on the tubing flanges to be joined.

As best illustrated in fig. 4 which is a cross-sectional front view of a first embodiment of a clamp according to the present invention, each clamping segment 4 has a V-shaped cross-section, i.e., the side walls 10 of recesses 5 descend toward the bottom of the recess 5, forming a pattern resembling a (truncated) letter V (also shown in fig. 6A). This geometry of the clamping segment 4 is often used in the automotive industry for connecting exhaust system piping. It is noteworthy that the scope of the present invention is not limited to V-shaped clamping segments 4 and, depending on the geometry of the ring flanges to be joined together, can adopt different designs, such as, without limitation, a U-shape (fig. 6B), a double-V shape (fig. 6C) or a double-U shape (fig. 6D).

As can be seen in figs. 1 and 2, three segments 4 of the clamp are connected in series via flat bars that form two springy bridges 6, one of which is illustrated in the enlargement of detail A in fig. 3. In the present manufacturing example, the springy bridges 6 are formed by flat bars that have been bent into a U-shape in side view. However, the shape of the flat bar forming the springy bridge 6 is not limited to that shown in the present embodiment of the invention, and alternatively may take other shapes provided that the resilient functionality of the resulting bridge is ensured. For example, the springy bridge 6 can be formed by a flat bar bent into a V-shape (see the example implementation illustrated in Fig. 12). Moreover, the central area 7 of the bridge extends radially outwardly of the clamp beyond the substantially circular outline defined by the outer surfaces of the clamping segments 4, which further increases the elastic functionality of the springy bridge 6 and increases the range of potential deformation of the clamp when clamping on annular flanges with larger outer diameters, thus allowing to compensate dimensional differences between flanges.

In the present embodiment of the invention, the clamp has springy bridges 6 that are formed from a flat bar with a rectangular cross-section, as shown in fig. 5A. In alternative implementations of the invention, the flat bars forming the springy bridges 6 may have other cross-sectional shapes, such as, without limitation, the shape of a barrel (fig. 5D), an hourglass (fig. 5E), a trapezoid or a polygon. In yet another non-limiting examples, the springy bridge 6 may have one or more reinforcing ribs 8, with the reinforcing ribs 8 extending along the circumferential direction on the outer surface or inner surface of the springy bridge 6, or on both surfaces thereof. As examples of the design of the springy bridge 6, there are springy bridge 6 with reinforcing ribs 8 extending symmetrically on the outer surface (fig. 5B), springy bridge 6 with reinforcing ribs 8 extending symmetrically on the outer surface and the inner surface (fig. 5C), springy bridge 6 with two reinforcing ribs 8 extending symmetrically on the outer surface (fig. 5F), and springy bridge 6 with two reinforcing ribs 8 extending symmetrically on the outer surface and inner surface (fig. 5G).

In yet another non-limiting embodiment of the invention, the springy bridge 6 can be formed by a flat bar that has a variable thickness along the circumferential direction of the clamp (as shown in the example illustrated in fig. 14).

The various variants of springy bridges 6 shown above are designed to modify the elastic properties of these elements and to modify the stiffness of the entire clamp structure. Depending on the applications and needs arising from the application of the clamp, by using, among other things, the hereby disclosed designs of springy bridges 6, as well as combinations thereof, it is possible to precisely determine the necessary operating parameters of the resulting clamp, such as the degree of elasticity, strength, deformability or stiffness.

It is noteworthy that the clamp according to the present embodiment is a homogeneous component formed from a single batching material by way of the embodiment of method of manufacturing a clamp, as shown below. Moreover, due to the various applications of the clamp, it can be made from alloyed (including stainless steels) and unalloyed steels, aluminum alloys, titanium alloys and other plastically formable materials. Advantageously, clamps for passenger car exhaust systems, due to high pressure and temperature, are made of 304, 316L, 316Ti, 321 material according to AISI.

The weight of a classic clamp known from the state of the art and made of stainless steel is about 305 g, compared to the solution according to invention, where the weight of the clamp is about 250 g. The aforementioned weight measurements include the same set of components, comprising a clamp together with a bolt, nut and washer. The mass of the clamp is therefore about 18% less compared to the classic solution. The above calculations were carried out for a clamp predisposed to connect flanges with a diameter of about 81 mm, consisting of three clamping 4 segments. The clamping 4 segments are arranged in relation to the A-axis on every 120°. The section thickness of the clamping 4 segments is about 3.5 mm. The maximum width of the clamping 4 segment is 20.15 mm. The solution in question, depending on the thickness of the individual clamping 4 segments, provides a very high axial clamping force of up to 35,000 N, and the installation of the clamp does not require highly specialized tools.

The clamp shown in this embodiment was produced by the method of manufacturing a clamp according to the first example of the invention. The method of manufacturing the clamp included the step of cutting the batching material in the form of round bars with a diameter of 12 mm and a length of 275 mm. The batching material was stainless steel with titanium 316Ti. In the present example of the implementation of the invention, the cutting stage was carried out by means of a band cutting machine.

Sequentially, the bar sections were cleaned in a blasting operation using a shot blasting device and a ball shot. The cleaning included the removal of products from the earlier cutting stage in the form of chips, and removal of the coolant used in previous the process.

The cleaned batching material was transferred to an induction heater, where it was heated to temperatures in the range of 1150°C to 1200°C, according to the process sheet for the material. Subsequently, the process of hot-working was implemented, which in the present manufacturing example was carried out by hot drop forging, by hammering on a premoulding nest and, in turn, a moulding nest of a die. The die forging of the clamp thus produced a three clamping 4 segments connected by a flat bar, and had a first end and a second end. In the next stage of the method, the clamp die forging was cooled in air. Then the process of removing excess material by cutting off the fash using an eccentric press was realized. The fash represents excess material and therefore production waste. Among other things, in this step, the fash at the ends of the die forging of the clamp was cut off to obtain the external shape of the fixing 3 brackets, and the fash of the flats connecting the three clamping 4 segments was cut off to obtain the external shapes of the springy bridges 6.

After the process of trimming the fash, the clamp die forgings are cleaned by means of a shot blasting operation. The trimmed clamp die forgings are calibrated advantageously using a screw-abrasive or hydraulic press, equipped with a bottom die and a top die.

The forging prepared in this way was machined to make holes for the clamping 9 fastener in the mounting 3 brackets. Stamping was advantageously carried out using an eccentric press.

Then, the process of bending the die forging of the clamp was realized in order to obtain its final circular shape of the clamp, in which the three clamping 4 segments are connected in series by springy bridges 6.

The next step is to assemble the clamping 9 fastener, for example, a bolt, a nut and a spacer, into the clamping 3 bracket arrangement.

The final stage of the method is quality control in terms of dimensional, surface and subsurface defects, and forwarding of the final clamps obtained by the method according to the present invention.

### Embodiment 2

A second example of the implementation of a clamp according to the present invention is shown in axonometric view in fig. 7, in cross-sectional side view in fig. 8 along with an enlargement of detail B in fig. 9.

The clamp according to the second embodiments has a design similar to that of the clamp shown in the first embodiment, and therefore the coinciding components will not be described again for the sake of clarity of the present disclosure.

Unlike the first embodiment of the invention, the second example of the clamp includes two clamping 4 segments of equal lengths of the arc defined on the inner surface of the recess 5, spaced with an equal angular distance of 180°. In the present manufacturing example, the design of the springy bridge 6 also coincides with the design of the springy bridge 6 shown in the first embodiments, except that a single reinforcing rib 8 extends on the outer surface of the flat bar forming the springy bridge 6, running along the circumferential direction of the clamp, which is best seen in fig. 7. The cross section of the springy bridge 6 thus corresponds to the cross section shown in fig. 5B. In addition, in contrast to the first example, the clamping segments 4 in the second example of the clamp design have a U-shaped cross-section, corresponding to the cross-section shown in fig. 6B.

The clamp shown in the present example of the invention was produced by the method of producing a clamp according to the second example of the invention. The method of manufacturing the clamp included substantially coincidental steps to the method shown in the first example of implementation, and therefore, for the sake of clarity of the disclosure, these steps have not been repeated.

In contrast to the method of producing a clamp presented in the first embodiment, the second example of the method used 304 material as the batching material. Stainless steel in the form of round bars with a diameter of 10.5 mm and a length of 240 mm was prepared by implementing a cutting operation on a band cutter. The round bars were cleaned in a shot-blasting operation implemented using a turbine shot-blasting machine and S170 spherical shot. Subsequently, the material was heated to a forging temperature in the range of 1120°C to 1170°C using an induction heater and transported to the pre-moulding cavity of die of a hydraulic hammer. With its use, the initial reshaping of the material took place. Subsequently, the second procedure in the moulding cavity of die was realized. The die forging thus formed was cooled, the fash was removed and the material was again subjected to a shot blasting operation. Subsequent steps were carried out coincidentally with the steps presented in the first example of how to manufacture a clamp.

### Embodiment 3

A third embodiment of a clamp according to the present invention is shown in axonometric view in fig. 10, in cross-sectional side view in fig. 11 along with an enlargement of detail C in fig. 12.

The clamp according to the third embodiment of the invention has a design similar to that of the clamps shown in the first and second manufacturing examples, and therefore the coinciding components will not be described again for the sake of clarity of the present disclosure.

Unlike the first embodiment of the invention, the third manufacturing example of the clamp includes five clamping segments 4 connected by four springy 6 bridges. The springy 6 bridges used in this example of execution are formed from a flat bar bent into a V-shape. It is also worth pointing out that the clamp according to the third embodiment, unlike the clamp according to the first and second examples of manufacture, is devoid of a clamping fastener 9. As shown in figs. 10 and 11, the absence of the clamping fastener 9 allowed for a better depiction of the clamping brackets 3.

### Embodiment 4

A fourth embodiment of a clamp according to the present invention is shown in side view in fig. 13 together with an enlargement of the detail D in fig. 14. The clamp according to the fourth embodiment of the invention has a design similar to that of the clamp shown in the first, second and third manufacturing examples, and therefore the coinciding components will not be described again for the sake of clarity of the present disclosure.

Unlike the third embodiment of the invention, the fourth embodiment of the clamp includes two clamping segments 4 connected by a single springy bridge 6. The springy bridge 6 used in this embodiment is formed from a flat bar, the thickness of which varies along the circumferential direction of the clamp. As best illustrated in the enlargement of detail D in fig. 14, the flat bar forming the springy bridge 6 in the areas of connection with adjacent clamping segments 4 has a first thickness, while in the central area 7 constituting the hinge point of the springy bridge 6 it has a second thickness, which is greater than the first thickness. In this way, a variable thickness along the circumferential direction of the flat bar forming the springy bridge 6 was provided, which made it possible to control the elasticity, stiffness and strength characteristics of the resulting structure.

The depicted change in thickness occurs smoothly, but this is not a limitation of the scope of the present invention, and in alternative examples of implementation it is possible to use a step change in the thickness of the flat bar forming the springy bridge 6.

Also, the thickness variation profile is not limited to that shown in this example implementation, and in alternative implementations can adopt any other thickness variation profile, provided that the desired characteristics of the resulting springy bridge 6 are provided, such as unconstrained, strength, stiffness and elastic coefficient.

### References' list:

1 - first end
2 - second end
3 - fixing bracket
4 - clamping segment
5 - indentation
6 - springy bridge
7 - middle area of the springy bridge
8 - reinforcing rib of the springy bridge
9 - clamping fastener
10 - side wall
A - central axis

## Claims

1. Clamp for joining tubing with annular flanges, being a band structure adapted to encircle the tubing to be joined, comprising a first end (1) and a second end (2) provided with fixing brackets (3) and at least two clamping segments (4) comprising a recess (5) receiving the annular flange of the tubing, **characterised in that** the at least two clamping segments (4) are connected in series by a springy bridge (6),wherein preferably
the clamping segments (4) have the same length of arc defined on the inner surface of the receiving recess (5),
and/or in the clamped position, the clamping segments (4) are spaced at an equal angular distance around the central axis (A) of the clamp.

2. Clamp according to claim 1, **characterised in that** springy bridge (6) is made of flat bar being U-letter or V-letter shaped wherein preferably
central area (7) of bridge extends radially out of clamp's substantially circular outline, which is determined by outer surfaces (4) of clamping segments (4).

3. Clamp according to any of claims 1 to 2, **characterised in that** springy bridge (6) has at least one reinforcing rib (8), wherein preferably reinforcing rib (8) extends along the circumferential direction, on external and/or internal surface of springy bridge (6).

4. Clamp according to any of claims 1 to 3, **characterised in that** flat bar of which springy bridge (6) is made of has a cross-section of rectangle or barrel-shaped, or hourglass or trapezium or polygon, and/or
flat bar has variable thickness along the circumferential direction of clamp.

5. Clamp according to any of claims 1 to 4, **characterised in that** clamping segment (4) has cross-section of V-letter, U-letter, double V-letter, double U-letter.

6. Clamp according to any of claims 1 to 5, **characterised in that** clamp is an uniform element.

7. Clamp according to any of claims 1 to 6, **characterised in that** in fixing brackets (3) is clamping fastener (9) placed.

8. Clamp according to any of claims 1 to 7, **characterised in that** it is made of steel or aluminium alloy or titanium alloy.

9. Method of manufacturing of clamp for joining tubing with annular flanges, **characterised in that** contains stages in which:
a) hot-working of batching material is carried out for making a die-forging of clamp, comprising at least two clamping segments (4) being connected by flat bar and having first and second end,
b) cutting off fash at the ends of die-forging of clamp for making fixing brackets (3), and fash of flat bar connecting at least two clamping segments (4) to obtain external shape of springy bridge (6),
c) calibration of at least two clamping segments (4),
d) bending of die-forging of clamp for making clamp of generally circular shape, clamp having at least two clamping segments (4) being connected in series via flat bar,
wherein preferably hot-working is carried out in temperature of 400°C to 1300°C,
wherein preferably hot-working in stage a) consists of die-forging with usage of hammer or forging press,
wherein preferably die-forging is executed in at least two sub-stages consisting of struck on premoulding cavity and struck on moulding cavity.

10. Method of manufacturing of clamp according to claim 9, **characterised in that** stage d) is carried out so that springy bridge (6) is formed by a U-letter or V-letter shaped flat bar
and/or
stage d) is carried out so that central area (7) of bridge extends radially out of clamp's generally circular outline, which is determined by outer surfaces (4) of clamping segments (4).

11. Method of manufacturing of clamp according to any of claims 9 to 10, **characterised in that** stage a) is carried out so that springy bridge (6) has at least one reinforcing rib (8) wherein preferably
reinforcing rib (8) extends along the circumferential direction, on external and/or internal surface of springy bridge (6).

12. Method of manufacturing of clamp according to any of claims 9 to 11, **characterised in that** stage a) is carried out so that flat bar of which springy bridge (6) is made of has a cross-section of rectangle or barrel-shaped, or hourglass or trapezium or polygon and/or
stage a) is carried out so that flat bar of which springy bridge (6) is made of has variable width along the circumferential direction of clamp.

13. Method of manufacturing of clamp according to any of claims 9 to 12, **characterised in that** stage a) is carried out that so clamping segment (4) has cross-section of V-letter, U-letter, double V-letter, double U-letter.

14. Method of manufacturing of clamp according to any of claims 9 to 13, **characterised in that** before stage a) batching material is prepared by cutting and preferably abrasive blasting of round bar and/or between stages b) and c) abrasive blasting is conducted.

15. Method of manufacturing of clamp according to any of claims 9 to 14, **characterised in that** after stage d) clamping fastener (9) is placed in fixing brackets (3).

16. Method of manufacturing of clamp according to any of claims 9 to 15, **characterised in that** batching material is steel or aluminium alloy or titanium alloy.
